# DEMANDE DE BREVET EUROPEEN

(11) **EP 0 843 259 A1**
(43) Date de publication de la demande: **20.05.1998**
(21) Numéro de dépôt: 97402628.8
(22) Date de dépôt: 04.11.1997
(51) Int. Cl.: G06F 9/46

(54) **Système de gestion et de traitement de transactions distribuées d'objets et procédé d'objets et procédé mis en oeuvre par ledit système**

(30) Priorité: 18.11.1996 FR 9614027
(71) Demandeur: BULL S.A., 78430 Louveciennes (FR)
(72) Inventeur: Lejeune, Hervé, 38920 Crolles (FR); Bouchy, Frédéric, 78000 Versailles (FR); Coq, Philippe, 38610 Gières (FR)
(74) Mandataire: Debay, Yves

(57) **Abrégé**

La présente invention concerne un système de gestion et de traitement de transactions d'objets dans un réseau de ressources distribuées fonctionnant en mode client/serveur, le client envoyant une requête vers au moins un objet transactionnel contenu dans au moins un des serveurs (RS1, RS2, ...) répartis sur le réseau tandis qu'un gestionnaire de transactions dialogue avec un gestionnaire de ressources (RM) au travers d'une interface prédéfinie par l'intermédiaire d'un protocole de validation de transaction. L'invention concerne également le procédé mis en oeuvre par ledit système. Ce système est remarquable en ce qu'il réalise l'intégration implicite des gestionnaires de ressources (RM) adaptés à l'interface prédéfinie, pour intégrer la participation des gestionnaires de ressources (RM) existants ou futurs dans une transaction distribuée gérée par le gestionnaire de transactions, en fournissant des objets capables de participer au protocole de validation de transaction mis en oeuvre par le gestionnaire de transactions, ces objets s'adressant aux gestionnaires de ressources par l'intermédiaire de l'interface prédéfinie. Pour cela, dans le présent système, chaque serveur comporte un composant local spécifique (LOC1, LOC2, ...) encapsulant les appels vers l'interface prédéfinie sous forme d'objets appelés objets de ressource (RSO) alors que de plus un serveur gestionnaire de l'interface prédéfinie (XAMS) est fourni par domaine pour mettre en oeuvre l'encapsulation du protocole de validation de transaction permettant ainsi à des objets multiples et distribués d'exécuter des requêtes multiples à l'intérieur d'une même et unique transaction.

## Description

La présente invention concerne un système de gestion et de traitement de transactions d'objets dans un réseau de ressources distribuées fonctionnant en mode client/serveur, le client envoyant une requête vers au moins un objet transactionnel contenu dans au moins un des serveurs répartis sur le réseau tandis qu'un gestionnaire de transactions dialogue avec un gestionnaire de ressources au travers d'une interface prédéfinie et par l'intermédiaire d'un protocole de validation de transaction. Elle concerne également le procédé mis en oeuvre par ledit système.

Traditionnellement et pendant longtemps, le contrôle et la gestion de données transactionnelles se sont effectués au moyen d'unités centrales informatiques centralisées. Ces machines furent d'abord accessibles localement, puis par la suite au travers de réseaux de plus en plus complexes mais cependant hiérarchisés. Ce n'est que plus récemment que le modèle distribué basé sur des systèmes ouverts a été exploité. De manière générale, un environnement de gestion distribuée permet d'intégrer l'administration des systèmes, des réseaux et des applications utilisateur, le dialogue entre les diverses machines du système et/ou entre les divers utilisateurs étant organisé autour de requêtes et de réponses à ces requêtes, les requêtes les plus courantes sur un réseau concernant l'accès aux fichiers ou l'accès aux données. Une application est dite conçue selon une architecture "client/serveur" lorsqu'elle se compose de deux programmes indépendants qui coopèrent l'un avec l'autre à la réalisation d'un même traitement, chacun s'exécutant dans un environnement propre (machine, système d'exploitation), une interface programmative utilisant un langage constitué de commandes permettant de maîtriser leur dialogue. Le mode client/serveur a l'avantage de permettre à un utilisateur (par exemple d'un simple micro-ordinateur) appelé client de confier une partie de sa tâche ou de ses opérations à effectuer à un serveur. De cette manière, le client dispose d'une capacité de calcul beaucoup plus importante que celle de son micro-ordinateur. De même, un client peut s'adresser à un serveur spécialisé et sous-traiter efficacement une opération, le serveur se trouvant dans des conditions de réalisation et de compétence optimales de par sa spécialisation. Dans ce contexte, le service de traitement transactionnel a pour objet d'offrir les fonctions spécifiques nécessaires pour la mise en oeuvre des applications qui modifient en temps réel une situation donnée. Les applications de traitement transactionnel disposent de services garantissant que les transactions sont complètement achevées ou ne sont pas du tout exécutées. Il est ici à rappeler qu'une transaction est un ensemble de commandes qui n'ont de signification que si elles sont toutes exécutées, ce concept garantissant la cohérence et l'intégrité des données. L'achèvement des transactions qui est appelé validation ou consolidation («commitment» par l'homme du métier) doit par conséquent présenter certaines caractéristiques. Ainsi, le service de traitement transactionnel doit s'assurer que les applications transactionnelles sont «Atomiques», «Cohérentes», «lsolées» et «Durables» (ACID), «atomique» signifiant que tous les éléments de la transaction sont traités ou qu'aucun élément n'est traité, «cohérent» signifiant que, si une partie quelconque de la transaction n'est pas exécutée, toutes les parties du système qui sont affectées par ladite transaction restent dans leur état original, «isolé» signifiant que pendant le traitement d'une transaction, les ressources partagées du système ne sont pas accessibles à une autre transaction, «durable» signifiant que les effets d'une transaction terminée sont permanents et ne sont pas perdus et qu'ainsi, en cas de défaut ou de panne, la transaction n'est pas perdue. Toutes ces propriétés permettent par conséquent de maintenir des informations, constituant une part non négligeable du patrimoine d'une organisation, cohérentes et toujours à jour quel que soit le type de pannes survenant (programme, système, matériel ou communications). La mise en oeuvre de ces propriétés est devenue plus difficile au fur et à mesure que les systèmes transactionnels sont eux-mêmes devenus plus sophistiqués. De nos jours, les transactions portent généralement sur plusieurs systèmes et affectent différentes bases de données ainsi que différents types de ressources. Pour gérer ces ensembles, le service de traitement transactionnel assure la gestion des ressources pour garantir la coordination des validations et assure des communications spécialisées pour gérer les applications de traitement transactionnel réparties. Le service de traitement transactionnel doit en outre coordonner les différentes applications qui doivent intervenir pour traiter une transaction globale. Pour cela, l'environnement transactionnel doit offrir une certaine souplesse, l'environnement «X/OPEN» en est un bon exemple, il permet de compléter efficacement les services de traitement transactionnel opérant sur des volumes importants de transactions et de gérer une architecture mettant en oeuvre un traitement transactionnel distribué. De cette façon, les applications peuvent utiliser de manière transparente des bases de données réparties.

Dans le domaine des applications orientées-objets, un certain nombre de règles ont été adoptées pour définir un objet commun et donner naissance au modèle d'objets distribués. L'OMG (Object Management Group) a particulièrement été actif pour gérer ce problème en proposant des modèles, des définitions et une architecture répondant efficacement aux différentes préoccupations de l'industrie. En effet, une architecture unique utilisant une technologie objet a été développée pour autoriser l'intégration aisée d'applications distribuées en permettant de garantir la réutilisation de composants déjà créés, l'interopérabilité et la portabilité et également la disponibilité d'interfaces logicielles pour une utilisation simple et rapide des produits mis dans le commerce. Selon la définition de l'OMG, un objet est la «combinaison d'un état et d'un jeu de méthodes», cet objet qui peut être une quelconque ressource répondant à des requêtes propres à des services. Pour fournir une architecture commune permettant de répondre auxdites requêtes, l'OMG a donc défini un modèle de référence présentant quatre composants principaux. Le premier est l'ORB (Object Request Broker) qui est un bus logiciel, c'est en fait un ensemble de mécanismes qui, dans un environnement distribué et de manière totalement transparente, permettent à un client d'envoyer des requêtes (et recevoir des réponses) à des objets distribués sur un réseau et ce, sans se préoccuper de la localisation de ces objets. Le second correspond à un ensemble de services appelé services d'objets, qui fournit des interfaces et des objets présentant des fonctions de base pour créer et maintenir des objets, fonctions telles que la persistance, le nommage, la notification d'événements, les transactions, etc.. Le troisième composant est relatif aux services communs qui présentent un ensemble d'interfaces et d'objets offrant des fonctions générales utiles à un grand nombre d'applications ou de systèmes indépendamment du domaine de l'application, moyens tels que l'impression, le stockage intermédiaire, le courrier électronique ou les agents dits intelligents. Le quatrième composant fournit des objets d'application spécifiques à des applications utilisateur déterminées comme par exemple, des commandes, des factures, des clients, etc..

De manière plus particulière, dans ce contexte transactionnel, le modèle de traitement de transactions distribuées de «X/OPEN» définit des gestionnaires de ressources comme étant des composants autorisant l'accès à des ressources partagées telles que des bases de données, des systèmes de fichiers ou des serveurs d'impression. Une ressource dont les données sont affectées par la validation («commit») ou l'annulation («rollback») d'une transaction est dite récupérable. Dans le cas d'une validation («commit»), les modifications et mises à jour déjà effectuées sont rendues effectives, dans le cas d'une annulation («rollback»), la ressource reste dans son état original d'avant la transaction ainsi en cas d'erreur, les opérations de la transaction en cours sont annulées. En contrôlant l'accès à une ressource récupérable et partagée, le gestionnaire de ressources permet donc de garantir que ladite ressource retournera dans un état cohérent après toute éventuelle panne. X/OPEN a défini une interface, l'interface XA, entre le gestionnaire de transactions et le gestionnaire de ressources. Cette interface prédéfinie et normalisée autorise l'implication et la coopération de gestionnaires de ressources hétérogènes dans une transaction distribuée unique et obéit à un protocole de validation choisi en deux phases géré par le gestionnaire de transactions. Les principales interactions dans le modèle de traitement de transactions distribuées de X/OPEN sont les suivantes. D'abord, une application client démarre une transaction, puis en émettant des requêtes, implique des ressources partagées concernées par la transaction, ces ressources partagées étant gérées par des gestionnaires de ressources. Ensuite, l'application client démarre et termine la transaction. A la terminaison de la transaction, le gestionnaire de transactions contacte les serveurs de ressources et coordonne le protocole de validation en deux phases via l'interface XA. Cependant, un tel choix technologique présente des inconvénients notables en particulier du fait de la complexité d'utilisation de cette interface par un serveur dans cet environnement transactionnel. En effet, pour effectuer une transaction, un serveur désirant utiliser une base de données doit dès le démarrage, utiliser cette interface pour notifier sa participation à ladite transaction et son désir d'utiliser la base de données et chaque fois que des requêtes arrivent il doit préciser que ces dernières font partie de la transaction puis qu'il termine sa participation à la transaction, une réponse aux requêtes ayant été apportée, alors qu'il doit d'autre part, pouvoir communiquer avec le gestionnaire de transactions pour être capable de réagir à ses sollicitations lors de la mise en oeuvre du protocole de validation en deux phases. Ce dialogue avec l'interface prédéfinie est d'autant plus complexe que le nombre de bases de données auxquelles ledit serveur désire accéder est important. En outre, les requêtes transitant par l'ORB ne font qu'ajouter à la complexité d'une telle utilisation. Enfin, la compatibilité est loin d'être totale entre les systèmes de bases de données relationnelles et la spécification de l'interface XA ce qui rend toute véritable portabilité aléatoire.

La présente invention a pour but de remédier aux inconvénients de l'art antérieur et propose un système de gestion et de traitement des transactions efficace et simple à mettre en oeuvre.

Pour cela le système de gestion et de traitement des transactions mentionné dans le préambule est remarquable en ce qu'il réalise l'intégration implicite des gestionnaires de ressources adaptés à l'interface prédéfinie, pour intégrer la participation des gestionnaires de ressources existants ou futurs dans une transaction distribuée gérée par le gestionnaire de transactions, en fournissant des objets capables de participer au protocole de validation de transaction mis en oeuvre par le gestionnaire de transactions, ces objets s'adressant aux gestionnaires de ressources par l'intermédiaire de l'interface prédéfinie.

Ainsi, lorsqu'un serveur utilise une ressource, par l'intermédiaire d'un gestionnaire de ressources (par exemple une base de données), la participation de cette base de données dans la transaction est directement gérée par le présent système, c'est-à-dire que cette base de données est encapsulée, et tous les appels vers l'interface prédéfinie sont réalisés implicitement et sont cachés au programmeur de l'application qui n'a, par conséquent, pas à s'en soucier.

Avantageusement, pour que plusieurs serveurs puissent utiliser une même base de données, chaque serveur comporte un composant local spécifique encapsulant les appels vers l'interface prédéfinie sous forme d'objets appelés objets de ressource alors que de plus un serveur gestionnaire de l'interface prédéfinie est fourni par domaine pour mettre en oeuvre l'encapsulation du protocole de validation de transaction permettant ainsi à des objets multiples et distribués d'exécuter des requêtes multiples à l'intérieur d'une même et unique transaction.

De cette manière et ceci contre toute attente, selon cette caractéristique de l'invention, encapsuler les appels vers l'interface prédéterminée sous forme d'objets de ressource, il est offert une solution efficace, rapide et d'un grand confort qui en fait réalise l'intégration implicite des gestionnaires de ressources adaptés à l'interface prédéfinie à l'intérieur des applications transactionnelles gérées par le gestionnaire de transactions et ceci quel que soit le type de requêtes transitant par l'ORB. De manière remarquable, les composants nécessaires à l'exploitation de l'invention peuvent être aisément fournis d'une part, avec les composants locaux spécifiques, intégrés aux librairies liées au programme d'application accédant au gestionnaire de ressources pour exécuter les opérations associées à la transaction et d'autre part, avec les serveurs gestionnaires de l'interface prédéfinie qui mettent en oeuvre l'encapsulation du protocole de validation de transaction, un serveur gestionnaire de l'interface prédéfinie différent étant prévu pour chaque gestionnaire de ressources adapté à l'interface prédéfinie différent. Ainsi, l'intégration implicite des gestionnaires de ressources adaptés à l'interface prédéfinie a pour résultat d'intégrer la participation des gestionnaires de ressources du commerce présents et futurs dans une transaction distribuée gérée par le gestionnaire de transactions en utilisant des objets qui contrôlent le protocole de validation de transaction du gestionnaire de ressources par l'intermédiaire de l'interface prédéfinie. De cette manière, la mise en oeuvre de la participation des gestionnaires de ressources au travers de l'interface prédéfinie qui apparaissait délicate et peu commode peut être aisément réaliser conformément à l'idée de l'invention. En fournissant l'intégration implicite de cette participation, la présente invention permet d'une part, de décharger les concepteurs et programmeurs d'applications de toute difficulté et d'autre part, de créer avantageusement des applications transactionnelles distribuées portables et cohérentes.

La description suivante en regard des dessins annexés, le tout donné à titre d'exemple non limitatif, fera bien comprendre comment l'invention peut être réalisée.

Sur la figure 1 est représenté, de manière très schématique, un exemple d'échange d'informations (requêtes et réponses à requêtes) entre un client et un serveur communiquant par l'intermédiaire de l'ORB, exemple permettant de préciser l'interaction entre les différents composants conformes à l'invention.

Sur la figure 2 est proposé un exemple d'architecture de serveurs récupérables permettant l'intégration d'un gestionnaire de ressources adapté à l'interface prédéfinie.

Quelques rappels concernant le modèle de traitement de transactions distribuées de «X/OPEN» sont à cet endroit utiles pour mieux comprendre comment les gestionnaires de ressources conformes à ce modèle peuvent être intégrés à des applications construites sur le modèle du présent système selon l'invention. L'architecture du présent système autorise une intégration implicite où la participation des gestionnaires de ressources dans une transaction distribuée est encapsulée selon des objets fournis par ledit présent système qui contrôlent le protocole de validation de transaction par l'intermédiaire de l'interface XA. Le modèle de traitement de transactions distribuées de «X/OPEN» définit donc des gestionnaires de ressources qui, comme cela a été précédemment dit, sont des composants autorisant l'accès à des ressources partagées telles que des bases de données, des systèmes de fichiers ou des serveurs d'impression. Une ressource est dite récupérable lorsque, étant affectée par une transaction, elle. peut être modifiée si la transaction est validée («commit») ou rester dans son état original si la transaction est annulée («rollback»). En contrôlant l'accès à une ressource récupérable et partagée, le gestionnaire de ressources permet donc de garantir que ladite ressource retournera dans un état cohérent après tout éventuel incident ou panne. X/OPEN a également défini l'interface XA entre le gestionnaire de transactions et le gestionnaire de ressources. Cette interface XA autorise l'implication et la coopération de gestionnaires de ressources hétérogènes dans une transaction distribuée unique et obéit à un protocole de validation en deux phases géré par le gestionnaire de transactions. Quelques instructions ou routines utilisées par cette interface XA sont explicitées ci-après sachant que deux types de routines sont exploitées. Un premier type qui permet à un gestionnaire de ressources d'appeler un gestionnaire de transactions, un gestionnaire de transactions conforme au modèle de X/OPEN étant supposé fournir les routines de ce premier type pour autoriser les gestionnaires de ressources à contrôler dynamiquement leur participation lors de lancements de transactions, ainsi :
- *ax*_*reg*, permet de faire enregistrer un gestionnaire de ressources par un gestionnaire de transactions,
- *ax*_*unreg*, permet au gestionnaire de transactions d'effacer l'enregistrement d'un gestionnaire de ressources'.

Le second type de routines concerne des routines fournies par les gestionnaires de ressources et appelées par les gestionnaires de transactions pour informer lesdits gestionnaires de ressources de lancements de transactions, ainsi :
- *xa*_*close*, permet une déconnexion du gestionnaire de ressources,
- *xa*_*commit*, permet de demander à un gestionnaire de ressources de valider une transaction,
- *xa_end,* permet de dissocier une unité d'exécution d'une transaction,
- *xa*_*forget*, permet au gestionnaire de ressources d'abandonner la connaissance qu'il a d'une transaction complétée de manière heuristique,
- *xa_open,* permet une connexion au gestionnaire de ressources et son initialisation pour une utilisation par un programme d'application,
- *xa_prepare,* permet de demander au gestionnaire de ressources de se préparer à valider une transaction,
- *xa*_*recover*, permet d'obtenir du gestionnaire de ressources une liste d'identifiants de transactions qu'il a préparée ou complétée de manière heuristique,
- *xa*_*rollback*, permet de demander à un gestionnaire de ressources d'annuler une transaction,
- *xa*_*start* permet de démarrer ou reprendre une transaction, il associe également un identifiant à une tâche future que l'unité d'exécution demande au gestionnaire de ressources, ce qui permet ainsi d'indiquer au gestionnaire de ressources que les tâches futures s'effectueront pour le compte d'une transaction.

Pour accéder à ce second type de routines le gestionnaire de transactions utilise une structure appelée *xa_switch_t* dont le nom est publié par le gestionnaire de ressources. Cette structure contient tous les points d'entrée aux routines du second type ainsi que des informations relatives au gestionnaire de ressources telles que son nom. Cependant, un gestionnaire de ressources sait que certaines tâches requises sont effectuées pour le compte d'une transaction donnée du fait que les appels du gestionnaire de transactions et du programme d'application sont émis dans la même unité d'exécution de contrôle et pour l'utilisation de certaines routines du second type, ceci impose donc les quelques contraintes suivantes :
- lors de l'ouverture et de la fermeture des gestionnaires de ressources, les appels aux routines *xa_open* et *xa_close* doivent être effectués pour chaque unité d'exécution de contrôle accédant au gestionnaire de ressources, l'appel à la routine *xa_open* doit être effectué avant d'émettre un quelconque autre appel à une routine du second type. Toutes les associations d'une unité d'exécution de contrôle à des transactions doivent avoir été terminées par le gestionnaire de transactions avant qu'il ne dissocie le gestionnaire de ressources de l'application en appelant la routine *xa_close,*
- lorsque des unités d'exécution sont associées à des transactions, les appels aux routines *xa_start* et *xa_end* doivent être effectués à partir de la même unité d'exécution de contrôle qui accède au gestionnaire de ressources,
- concernant les appels aux routines du second type participant au protocole de validation en deux phases, un seul appel à la routine *xa_prepare* est permis pour demander au gestionnaire de ressources de préparer pour la validation le travail exécuté pour le compte d'une transaction, les appels suivants de cette routine entraînant une erreur, également toutes les associations d'unités d'exécution de contrôle à la transaction, c'est-à-dire les traitements concernés par la transaction, doivent avoir été terminées avant que le système ne puisse demander au gestionnaire de ressources de préparer la validation.

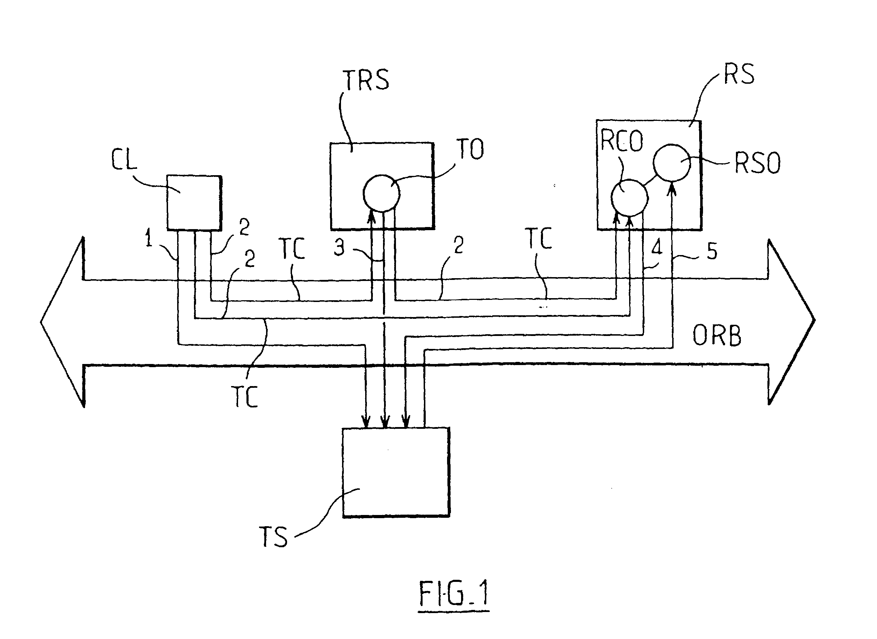

Le système de gestion et de traitement de transactions selon l'invention présente également, bien entendu, les fonctionnalités générales comme, démarrer ou terminer les transactions, contrôler la propagation et l'étendue des transactions, permettre à des objets multiples d'être impliqués dans une unique transaction, permettre à des objets d'associer à une transaction des changements dans leur état interne, ou coordonner l'achèvement des transactions au moyen d'une validation en deux phases (préparation et validation) et possibilité d'abandon. Ce système de gestion et de traitement de transactions, définit ainsi des interfaces qui permettent à des objets distribués multiples d'exécuter des requêtes multiples à l'intérieur d'une même transaction. Suivent quelques définitions qui avec l'aide de la figure 1 seront utiles à une meilleure appréhension du contenu de l'invention. Ainsi, dans le contexte des applications transactionnelles distribuées où une transaction distribuée peut impliquer des objets distribués multiples exécutant des requêtes multiples, un client transactionnel est un client CL qui invoque diverses opérations à l'intérieur d'une même transaction tandis qu'un client qui démarre la transaction est appelé demandeur ou initiateur de la transaction. L'étendue d'une transaction est définie par un contexte de transaction TC qui est partagé par l'ensemble des objets participant, le contexte de transaction étant propagé avec chaque requête transactionnelle, les objets transactionnels TO d'un serveur transactionnel TRS participant à la propagation de la transaction. Au niveau d'un serveur récupérable RS, les objets récupérables RCO sont des objets transactionnels dont les données sont affectées par la validation («commitment») ou l'annulation («rolling back») de la transaction, un objet récupérable fait enregistrer un objet dit de ressource RSO par le service de transactions TS pour associer les changements opérés sur ses données avec cette transaction. Le service de transactions contrôle le protocole de validation en deux phases en émettant des requêtes vers les ressources enregistrées. L'interaction entre ces divers composants est ci-après précisée à l'aide de la figure 1. Le trajet fléché référencé 1 indique qu'un client transactionnel CL démarre et termine la transaction. Le trajet fléché référencé 2 indique qu'un contexte de transaction TC est créé lorsqu'une transaction est démarrée et est transmis aux objets transactionnels TO et aux objets récupérables RCO avec chaque requête transactionnelle. Le trajet fléché référencé 3 indique qu'un objet transactionnel TO propage la transaction sans être impliqué dans l'achèvement de cette transaction, cependant il peut forcer l'annulation («rollback») de ladite transaction. Selon le trajet fléché référencé 4, un objet récupérable RCO fait enregistrer un objet de ressource RSO par le service de transactions TS pour permettre l'achèvement de la transaction'il peut également forcer l'annulation («rollback») de cette transaction. Enfin, le trajet fléché référencé 5 indique qu'un objet de ressource RSO participe à l'achèvement de la transaction selon le protocole de validation en deux phases contrôlé par le service de transactions TS. De cette manière, il est obtenu une entière interopérabilité entre ce modèle fonctionnel conforme à l'invention et le modèle de traitement de transactions distribuées de X/OPEN. Du fait de cette totale compatibilité entre ces deux modèles, les objets récupérables peuvent être mis en oeuvre en utilisant des gestionnaires de ressources adaptés à l'interface XA alors que le système de traitement et de gestion des transactions selon l'invention met en oeuvre l'encapsulation de ladite interface XA, l'enregistrement implicite des objets de ressource ainsi que la coordination de la récupération et de l'achèvement des transactions. Le système selon l'invention associe un certain nombre d'objets à chaque transaction, objets utilisés pour former le contexte de transaction TC et qui de préférence sont les suivants :
- l'objet de coordination dont l'interface permet aux objets récupérables d'enregistrer des ressources pour l'achèvement d'une transaction,
- l'objet de terminaison dont l'interface supporte les opérations de validation ou d'annulation de la transaction,
- ou encore l'objet de contrôle qui permet aux clients de retrouver à la fois les objets de coordination et de terminaison.

Pour gérer une transaction, les applications client CL peuvent utiliser deux types de gestion de contexte. Une gestion de contexte directe avec laquelle l'application client manipule les objets du service de transactions TS en invoquant directement les objets qui représentent la transaction et une gestion de contexte indirecte avec laquelle l'application client ne voit pas les objets du service de transactions TS qui sont alors manipulés de manière interne par le système selon l'invention. En outre, un objet transactionnel peut exiger que des informations relatives à des transactions soient propagées soit implicitement soit explicitement. En mode de propagation implicite, le contexte de transaction est propagé avec la requête de manière transparente au travers de l'ORB, ce mode impliquant une coopération entre l'ORB et le service de transactions TS alors que dans le mode de propagation explicite les informations relatives à des transactions apparaissent sous forme de paramètres explicites donnés par le client. Lors de transactions, les clients peuvent utiliser une forme ou les deux formes de gestion de contexte et peuvent communiquer avec des objets qui indifféremment exigent l'un ou l'autre mode de propagation de transaction, les interfaces du système autorisant cette commutation entre ces deux modes. Cependant, dans la majorité des applications deux combinaisons prédominent. La première correspond à l'utilisation d'une gestion de contexte directe et d'un mode de propagation de transaction explicite, dans ce cas les objets de coordination, de terminaison et de contrôle sont directement manipulés au niveau de la programmation de l'application et au moins une partie d'entre eux sont propagés explicitement comme arguments, cette combinaison permet de construire des applications transactionnelles avec des mises en oeuvre comme une application CORBA traditionnelle («Common Object Request Broker Architecture», spécification de l'OMG et de X/OPEN). La seconde correspond à l'utilisation d'une gestion de contexte indirecte et d'un mode de propagation de transaction implicite, dans ce cas l'application client utilise l'objet local courant pour créer et contrôler la transaction et associer le contexte de transaction à des unités d'exécution. Lorsque le client émet une requête sur des objets transactionnels, le contexte de transaction associé à l'unité d'exécution courante est implicitement propagé avec la requête.

Le système selon l'invention permet également de contrôler l'intégrité d'une transaction car avec le mode de propagation de transaction implicite il vérifie le «comportement» d'une transaction en assurant que :
- aucune requête n'est pendante au moment où le client initiateur de la transaction désire la valider. Ceci peut arriver lorsque des requêtes synchrones différées ont été émises pendant la transaction et que l'instruction de validation est appelée, qu'une gestion de contexte directe ou indirecte soit utilisée, avant que toutes les requêtes n'aient été renvoyées,.
- aucune requête n'est pendante au moment du retour d'un traitement. Ceci peut arriver lorsque des requêtes synchrones différées ont été émises pendant le traitement d'une requête et que la fin dudit traitement survient avant que toutes les réponses à ces requêtes n'aient été reçues,
- une seule et unique unité d'exécution est en train d'opérer lorsque la validation est demandée par le client initiateur.

De manière caractéristique, un objet de ressource représente l'implication ou la participation d'un objet récupérable dans une transaction. Normalement, les objets de ressource et les objets récupérables sont des objets indépendants, ceci permettant à un objet récupérable de participer simultanément à plusieurs transactions et de faire enregistrer un objet de ressource différent pour chaque transaction. Par contre ici, le fait de se faire enregistrer lui-même comme l'objet de ressource implique que l'objet récupérable ne participe qu'à une seule transaction à la fois. L'enregistrement des objets de ressource est réalisé en appelant l'instruction d'enregistrement de ressource sur l'objet de coordination. Pour cela et de manière dépendante du mode de gestion de contexte utilisé, un objet récupérable doit tout d'abord retrouver la référence d'objet de l'objet de coordination en utilisant les opérations appropriées. Du fait qu'un objet récupérable peut recevoir plusieurs requêtes pour une même transaction, il doit dans un premier temps vérifier si l'objet de ressource a déjà été enregistré pour la même transaction. L'opération d'enregistrement de ressource retourne la référence d'objet de l'objet de coordination récupérable qui doit être enregistrée dans un dispositif de stockage permanent de manière à pouvoir être utilisée pendant la phase de récupération en cas de panne.

Dans cet exemple, le protocole ici utilisé est un protocole de validation en deux phases avec possibilité d'abandon, avec ce modèle, l'objet de coordination qui lance ce protocole n'a pas besoin de stocker une quelconque information en l'enregistrant de manière stable avant la décision de validation de la transaction et les objets de ressource n'ont pas besoin d'enregistrer quoi que ce soit avant de lancer une opération de préparation. Cependant, l'enregistrement permet au système de compléter et d'achever des transactions en cas de défaillance ou d'un quelconque incident.

De manière remarquable, selon le procédé mis en oeuvre par le système conforme à l'invention, dans le cas de l'achèvement normal de la transaction où au moins une ressource a demandé la validation et les autres ressources concernées ont soit demandé la validation soit une simple lecture, l'enregistrement de différentes informations est réalisé pour permettre une reprise automatique de la transaction après qu'une panne est intervenue, l'enregistrement de l'information nécessaire à l'objet de ressource pour déterminer l'issue de la transaction lors d'une récupération après une panne après que ses changements ont été préparés, c'est-à-dire basiquement, la référence d'objet de l'objet de coordination récupérable qui a été retournée par l'instruction d'enregistrement de ressource, l'enregistrement de l'information nécessaire à un objet de coordination pour achever la transaction après récupération suite à une panne, c'est-à-dire, la référence d'objet de l'objet de contrôle et les références d'objet des ressources enregistrées qui ont demandé la validation, l'enregistrement de toute décision prise de manière heuristique pour que l'objet de ressource puisse redéterminer la même issue pour la transaction dans le cas où l'opération de validation est exécutée plus d'une fois, si une décision a été prise de manière heuristique, il est ajouté au contenu de l'enregistrement de l'information nécessaire à l'objet de coordination pour achever la transaction la décision prise de manière heuristique jusqu'à ce que l'objet de coordination ait lancé l'opération permettant d'oublier cette décision pour toutes les ressources qui ont pris des décisions de manière heuristique.

De manière remarquable, lorsqu'un seul objet de ressource a été enregistré, alors une seule opération de validation est exécutée sur l'objet de ressource, et aucun enregistrement d'information n'est nécessaire.

Il est à noter que pour le client initiateur, la validation de la transaction ne signifie pas obligatoirement que la transaction va être validée, dans certains cas la transaction sera annulée, par exemple, lorsque au moins un des participants à la transaction ne désire pas valider cette dernière ou lorsque le temps imparti, associé à cette transaction et fixé au moment de la création, a expiré.

Dans le cas où un incident est survenu et qu'un serveur récupérable a été redémarré, le serveur lit l'enregistrement pour retrouver les références d'objets des objets de coordination récupérables. Chaque objet de ressource appelle l'opération permettant de rejouer l'achèvement de la transaction sur l'objet de coordination récupérable correspondant. Le redémarrage et la récupération des objets récupérables sont ainsi contrôlés par le gestionnaire de transactions.

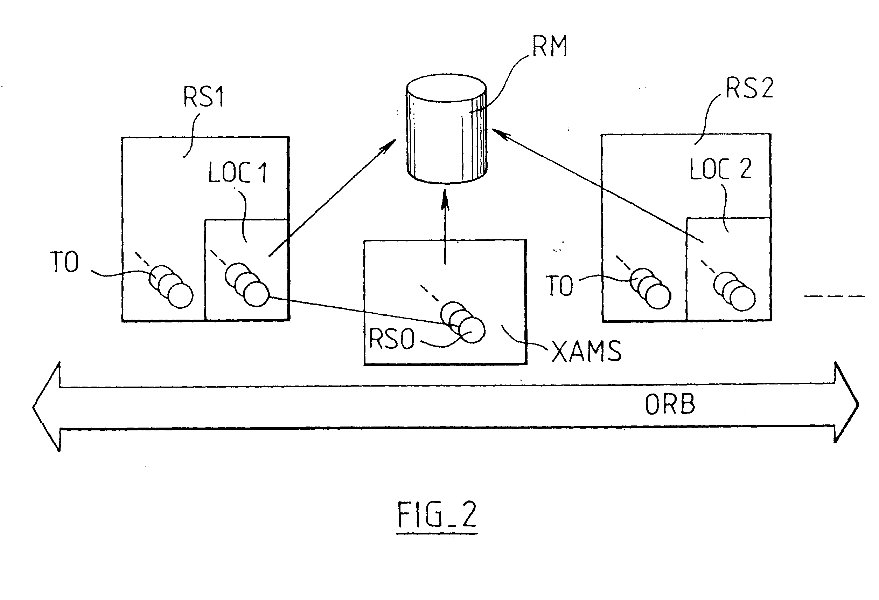

Les gestionnaires de ressources adaptés à l'interface XA peuvent être utilisés pour stocker des données liées aux transactions, l'association du gestionnaire de ressources avec la transaction étant réalisée par l'intermédiaire d'opérations au travers de l'interface XA. Le système selon l'invention met en oeuvre l'encapsulation des appels de l'interface XA qui apparaissent par conséquent totalement transparents au programmeur d'une application transactionnelle. Pour résoudre efficacement les problèmes posés par ces diverses contraintes, selon l'invention il est proposé avec la figure 2, une architecture de serveurs récupérables, architecture permettant d'avantageusement intégrer un gestionnaire de ressources adapté à l'interface prédéfinie, par exemple l'interface XA.

L'intégration implicite des gestionnaires de ressources adaptés à l'interface XA à des applications transactionnelles gérées par le système selon l'invention est donc obtenue en encapsulant les appels vers l'interface XA sous forme de mises en oeuvre d'objets fournis comme composants du présent système.

Pour cela, deux types de composants permettent d'encapsuler l'intégration de ces gestionnaires de ressources. Le premier type correspond à un composant local LOC1, LOC2, ..., implanté sur chaque serveur récupérable RS1, RS2 la bibliothèque ou librairie du service de transaction étant liée à chaque serveur récupérable accédant à un gestionnaire de ressources RM. Cette bibliothèque met en oeuvre ces composants locaux du système selon l'invention qui vont permettre de réaliser l'association implicite des unités d'exécution en relation avec les transactions et c'est également cette bibliothèque qui permet de réaliser la gestion de contexte indirecte, support de la propagation et du contrôle implicites. Le second type de composant correspond à un serveur XAMS gestionnaire de l'interface prédéfinie, dans le présent exemple l'interface XA, ce serveur XAMS gérant des objets de ressource capables de participer au protocole de validation en deux phases par encapsulation des appels à l'interface prédéfinie et faisant enregistrer les objets de ressource, un par transaction, par l'intermédiaire des objets de coordination des transactions. Il y a un serveur XAMS par domaine de base de données qui va gérer tous les objets de ressource pour les transactions associées aux serveurs récupérables pour ce domaine donné, un domaine de base de données étant défini, dans ce contexte relationnel, comme le jeu de tables auxquelles un utilisateur donné peut accéder.

Pour une intégration et une utilisation efficaces des gestionnaires de ressources adaptés à l'interface XA, et comme cela a été précisé précédemment, cette architecture permet de prendre avantageusement en compte, entre autres et sachant qu'aucune interface additionnelle n'aura besoin d'être définie pour supporter lesdits gestionnaires de ressources, les diverses restrictions et conditions suivantes :
- à l'ouverture des gestionnaires de ressources, certaines bases de données ne permettant d'accéder qu'à un seul de leurs domaines par traitement, donc un seul appel *xa_open* par traitement pour une base de données déterminée, lesdits gestionnaires de ressources n'étant initialisés (*xa_open*) que lors des opérations de création des composants locaux du système,
- l'association (*xa_star*) et la dissociation (*xa_end*) d'unités d'exécution avec des transactions doivent être réalisées pour chaque requête transactionnelle,
- lors de l'achèvement de la transaction, toutes les associations avec la transaction, c'est-à-dire tous les traitements concernés par la transaction, doivent avoir été fermés avec une opération de terminaison (*xa_end*) avant que le système ne puisse demander au gestionnaire de ressources d'appeler l'opération (*xa_prepare*) de la phase de préparation conforme au protocole de validation en deux phases,
- un seul traitement est autorisé à appeler l'opération (*xa_prepare*) de la phase de préparation conforme au protocole de validation en deux phases,
- un seul traitement est autorisé à appeler l'opération (*xa_commit*) de la phase de validation conforme au protocole de validation en deux phases,
- les opérations (*xa_prepare, xa_commit*) selon le protocole de validation en deux phases sont encapsulées par l'interface ressources,
- la fermeture des gestionnaires de ressources (*xa_close*) est réalisée en libérant (cette opération est appelée «release» par l'homme du métier) les composants locaux lors de la déconnexion du serveur,
- la récupération (*xa_recover*) est exécutée de manière interne lors de l'opération de mise en route du serveur gestionnaire de l'interface XA afin d'effectuer une procédure de reprise automatique, un appel *xa_recover* est exécuté par le serveur gestionnaire de l'interface XA vers le gestionnaire de ressources pour retrouver les identifiants des transactions qui ont été préparées ou complétées de manière heuristique. Seuls les identifiants créés par le système selon l'invention sont pris en considération, ces identifiants contenant une valeur spécifique dudit système.

Lorsque de quelconques défaillances sont constatées, des procédures de reprise automatiques sont mises en oeuvre. Dans le cas d'une défaillance impliquant le redémarrage du serveur gestionnaire de transactions, la procédure de reprise permet de terminer une transaction interrompue dans la mesure où la défaillance est intervenue après l'enregistrement d'une décision de validation. Dans ce cas, le gestionnaire de transactions est capable d'exécuter la deuxième phase du protocole de validation, tous les autres cas entraînant l'annulation de la transaction. Dans le cas d'une défaillance impliquant le redémarrage du serveur gestionnaire de l'interface prédéfinie, la procédure de reprise consiste à contacter le gestionnaire de ressources, par exemple la base de données, et à récupérer les identifiants des transactions se trouvant dans l'état préparé (opération xa_recover), puis à recréer les objets de ressources correspondants afin que ces derniers contactent le gestionnaire de transactions pour lui indiquer qu'ils sont prêts à participer à la deuxième phase du protocole de validation pour la transaction interrompue.

En utilisant les requêtes de l'ORB, transparentes relativement au programme d'application, il est obtenu une interopérabilité entre les composants locaux et les objets du serveur gestionnaire de l'interface XA.

L'intégration implicite des gestionnaires de ressources adaptés à l'interface XA ne peut être réalisée qu'avec un fonctionnement en mode de propagation implicite. L'association des unités d'exécution de contrôle avec la transaction est effectuée en appelant l'opération *xa*_*start* lors de la réception d'une requête, ce qui permet d'assurer que l'association est réalisée avant qu'aucun travail requis ne soit exécuté. La dissociation des unités d'exécution d'avec la transaction est elle-même obtenue en appelant l'opération *xa*_*end* lors de l'envoi d'une réponse à une requête, ce qui permet d'assurer que la dissociation n'est réalisée que lorsque tous les travaux requis ont été exécutés, le système selon l'invention impliquant un contrôle empêchant tout retour de réponse lorsqu'il existe une quelconque requête pendante. Ainsi, du fait que la réception d'une requête et l'envoi d'une réponse à cette requête sont toujours exécutés pour la même unité d'exécution propre à cette requête, ce mode permet de garantir que les opérations *xa_start* et *xa_end* sont appelées à partir de la même unité d'exécution de contrôle accédant au gestionnaire de ressource.

De manière remarquable, lors de la réception d'une requête de préparation selon le protocole de validation en deux phases, l'objet de ressource demande au composant local de chaque serveur récupérable de terminer l'associafion de l'unité d'exécution avec la transaction en appelant l'opération de dissociation (*xa_end*) adéquate. Lorsque toutes les associations sont terminées, l'objet de ressource lance une opération de préparation vers le gestionnaire de ressource et retourne la décision appropriée.

Pour résumer, un développeur fournisseur d'objets transactionnels qui désire que les données persistantes et donc durables de ses objets soient gérées par un gestionnaire de ressources, par exemple une base de données, doit :
- fournir la mise en oeuvre de l'objet spécifique en effectuant les accès au gestionnaire de ressources pour mettre à jour les données persistantes, les objets RCO de la figure 1,
- associer à ces objets d'autres objets, des objets de ressources capables de participer au protocole de validation de transaction initié par le gestionnaire de transactions. Il est à noter que la mise en oeuvre de ces objets est complexe car ils doivent être capables de dialoguer à la fois avec le gestionnaire de transactions (enregistrement des ressources, participation au protocole de validation) et avec le gestionnaire de ressources (association des unités d'exécution, synchronisation des différents serveurs participants, mise en oeuvre du protocole de validation, mise en oeuvre des procédures de reprise en cas de panne).

Un des avantages de l'invention réside dans le fait que ce fournisseur d'objets transactionnels est totalement déchargé de la gestion de ces objets de ressources. Il peut donc se concentrer sur la mise en oeuvre de l'objet spécifique qu'il fournit, le reste étant géré de manière complètement transparente. Un autre puissant avantage provient du fait que pour gérer les relations entre ces objets de ressources et le gestionnaire de ressources, l'interface prédéfinie XA, qui est normalisée, est utilisée, ce qui assure la portabilité et permet d'utiliser tous les gestionnaires de ressources existants et futurs du marché pourvu que ceux-ci soient conformes à l'interface utilisée.

Pour cela, le système selon l'invention est principalement composé de serveurs mettant en oeuvre les divers objets utilisés et de bibliothèques ou librairies qui doivent être liées aux composants de l'application clients et/ou serveurs. Deux catégories de serveurs mettent en oeuvre les divers objets utilisés. La première catégorie correspond au serveur gestionnaire de transactions qui met en oeuvre des objets réalisant les fonctionnalités du système pour créer des transactions, coordonner le protocole de validation de transaction, validation en deux phases dans l'exemple, compléter et terminer les transactions et coordonner la récupération. La seconde catégorie correspond aux serveurs gestionnaires de l'interface prédéfinie, par exemple l'interface XA, qui gèrent des objets de ressources capables de participer au protocole de validation par encapsulation des appels à l'interface prédéfinie,, objets réalisant l'intégration implicite des gestionnaires de ressources adaptés à l'interface XA, ces derniers n'étant utilisés que par des applications exploitant des gestionnaires de ressources adaptés à l'interface XA pour stocker des données persistantes relatives à des objets transactionnels. Les librairies quant à elles mettent en oeuvre les composants locaux capables de réaliser la gestion de contexte indirecte, le contrôle et la gestion d'informations locales relatives au contexte de transaction. Deux types de librairies sont prévues dépendant du fait que l'application utilise ou non des gestionnaires de ressources adaptés à l'interface XA, ces deux types étant mis en oeuvre à partir de librairies partagées et étant utilisés en modes de gestion de contexte directe et de propagation de transaction implicite. Le premier type de librairie contient les talons (appelés «stubs» par l'homme du métier) générés par le compilateur de langage de définition d'interface (lDL) pour accéder aux objets du gestionnaire de transactions. Le second type de librairie contient les talons générés par le compilateur de langage de définition d'interface pour accéder aux objets du serveur gestionnaire de l'interface XA, ce dernier type n'étant utilisé que par des applications exploitant des gestionnaires de ressources adaptés à l'interface XA pour stocker des données relatives à des objets persistants.

Le système conforme à l'invention de par sa conception permet donc une interconnexion aisée avec tout gestionnaire dé ressource adapté à l'interface XA pour un grand nombre d'applications utilisant et accédant à des systèmes de gestion de bases de données relationnelles comme par exemple, Oracle [marque d'Oracle Corporation et de Bull S. A.], Sybase [marque de Sybase, Inc.], Informix [marque de Informix Software, lnc.], etc..

Pour conclure, grâce à l'idée de l'invention, encapsuler les appels vers l'interface prédéterminée sous forme d'objets de ressource, il est offert une solution efficace, rapide et d'un grand confort qui en fait réalise l'intégration implicite des gestionnaires de ressources adaptés à l'interface prédéfinie à l'intérieur des applications transactionnelles gérées par le gestionnaire de transactions et ceci quel que soit le type de requêtes transitant par l'ORB. Les composants nécessaires peuvent être aisément fournis d'une part, avec les librairies liées au programme d'application accédant au gestionnaire de ressources pour exécuter les opérations associées à la transaction et d'autre part, avec les serveurs gestionnaires de l'interface prédéfinie qui mettent en oeuvre l'encapsulation du protocole de validation de la transaction, un serveur gestionnaire de l'interface prédéfinie différent étant prévu pour chaque gestionnaire de ressources adapté à l'interface prédéfinie différent. L'intégration implicite des gestionnaires de ressources adaptés à l'interface prédéfinie a pour résultat d'intégrer la participation des gestionnaires de ressources du commerce présents et futurs dans une transaction distribuée gérée par le gestionnaire de transactions en utilisant des objets qui contrôlent le protocole de validation de la transaction du gestionnaire de ressources par l'intermédiaire de l'interface prédéfinie. Ainsi, la mise en oeuvre de la participation des gestionnaires de ressources au travers de l'interface prédéfinie qui apparaissait délicate et peu commode peut être aisément réaliser conformément à l'idée de l'invention. En fournissant l'intégration implicite de cette participation, la présente invention permet d'une part, de décharger les concepteurs et programmeurs d'applications de toute difficulté et d'autre part, de créer avantageusement des applications transactionnelles distribuées portables et cohérentes. Ce choix technologique permet de réduire très significativement les coûts puisque tout développement, propre à faire évoluer ou enrichir le système de départ, est évité alors que la portabilité sur différents systèmes est rendue aisée avec des mises en oeuvre comme celles de CORBA.

## Revendications

1. Système de gestion et de traitement de transactions d'objets dans un réseau de ressources distribuées fonctionnant en mode client/serveur, le client envoyant une requête vers au moins un objet transactionnel contenu dans au moins un des serveurs répartis sur le réseau tandis qu'un gestionnaire de transactions dialogue avec un gestionnaire de ressources au travers d'une interface prédéfinie par l'intermédiaire d'un protocole de validation de transaction, caractérisé en ce qu'il réalise l'intégration implicite des gestionnaires de ressources adaptés à l'interface prédéfinie, pour intégrer la participation des gestionnaires de ressources existants ou futurs dans une transaction distribuée gérée par le gestionnaire de transactions, en fournissant des objets capables de participer au protocole de validation de transaction mis en oeuvre par le gestionnaire de transactions, ces objets s'adressant aux gestionnaires de ressources par l'intermédiaire de l'interface prédéfinie.

2. Système de gestion et de traitement de transactions d'objets selon la revendication 1, caractérisé en ce que, chaque serveur comporte un composant local spécifique encapsulant les appels vers l'interface prédéfinie sous forme d'objets appelés objets de ressource alors que de plus un serveur gestionnaire de l'interface prédéfinie est fourni par domaine pour mettre en oeuvre l'encapsulation du protocole de validation de transaction permettant ainsi à des objets multiples et distribués d'exécuter des requêtes multiples à l'intérieur d'une même et unique transaction.

3. Système de gestion et de traitement de transactions d'objets selon la revendication 2, caractérisé en ce que, le composant local spécifique encapsulant les appels vers l'interface prédéfinie est intégré à la librairie liée au programme d'application accédant au gestionnaire de ressources pour exécuter les opérations associées à la transaction.

4. Procédé mis en oeuvre par le système de gestion et de traitement de transactions d'objets selon les revendications 1 à 3 caractérisé en ce que, lorsque un client démarre une transaction, un contexte de transaction est créé et est transmis aux objets transactionnels et aux objets récupérables avec chaque requête transactionnelle, ce contexte de transaction étant formé par un certain nombre d'objets de coordination, de terminaison et de contrôle associés à chaque transaction, l'objet de coordination permettant aux objets récupérables d'enregistrer des ressources pour l'achèvement d'une transaction, l'objet de terminaison supportant les opérations de validation ou d'annulation de la transaction et l'objet de contrôle permettant au client de retrouver à la fois les objets de coordination et de terminaison.

5. Procédé mis en oeuvre par le système de gestion et de transactions d'objets selon la revendication 4, dans le cas de l'achèvement normal de la transaction où au moins une ressource a demandé la validation et les autres ressources concernées ont soit demandé la validation soit une simple lecture, caractérisé en ce que, l'enregistrement de différentes informations est réalisé pour permettre une reprise automatique de la transaction après qu'une panne est intervenue, l'enregistrement de l'information nécessaire à l'objet de ressource pour déterminer l'issue de la transaction lors d'une récupération après une panne après que ses changements ont été préparés, l'enregistrement de l'information nécessaire à un objet de coordination pour achever la transaction après récupération suite à une panne, l'enregistrement de toute décision prise de manière heuristique pour que l'objet de ressource puisse redéterminer la même issue pour la transaction dans le cas où l'opération de validation est exécutée plus d'une fois, , si une décision a été prise de manière heuristique, il est'ajouté au contenu de l'enregistrement de l'information nécessaire à un objet de coordination pour achever la transaction la décision prise de manière heuristique jusqu'à ce que l'objet de coordination ait lancé l'opération permettant d'oublier cette décision pour toutes les ressources qui ont pris des décisions de manière heuristique.

6. Procédé mis en oeuvre par le système de gestion et de transactions d'objets selon la revendication 4, caractérisé en ce que, lorsqu'un seul objet de ressource a été enregistré, une seule opération de validation est exécutée sur l'objet de ressource sans enregistrement d'information.

7. Procédé mis en oeuvre par le système de gestion et de transactions d'objets selon les revendications 4 ou 5, caractérisé en ce que, dans le cas où un incident est survenu et qu'un serveur récupérable a été redémarré, le serveur lit l'enregistrement pour retrouver les références d'objets des objets de coordination récupérables, chaque objet de ressource appelant l'opération permettant de rejouer l'achèvement de la transaction sur l'objet de coordination récupérable correspondant, le redémarrage et la récupération des objets récupérables étant ainsi contrôlés par le gestionnaire de transactions.

8. Procédé mis en oeuvre par le système de gestion et de transactions d'objets selon les revendications 4, 5 ou 7, caractérisé en ce que, lors de la réception d'une requête de préparation selon le protocole de validation en deux phases, l'objet de ressource demande au composant local de chaque serveur récupérable de terminer l'association de l'unité d'exécution avec la transaction en appelant l'opération de dissociation adéquate, tandis que lorsque toutes les associations sont terminées, l'objet de ressource lance une opération de préparation vers le gestionnaire de ressource et retourne la décision appropriée.
